# EUROPEAN PATENT APPLICATION

(11) **EP 3 940 114 A1**
(43) Date of publication of application: **19.01.2022**
(21) Application number: 20186440.2
(22) Date of filing: 17.07.2020
(51) Int. Cl.: C25B 1/00, B01D 53/14, C25B 3/25, B01J 20/28, H01M 8/0656

(54) **ELECTROCHEMICAL-ASSISTED CARBON CAPTURE PROCESS**

(71) Applicant: Novazera Limited, Hartpury, Gloucestershire GL19 3BE (GB)
(72) Inventor: MAGAGNIN, Luca, 20017 Rho MILANO (IT)
(74) Representative: Ripamonti, Enrico

(57) **Abstract**

The present invention is directed to an improved process for carbon capture that employs regenerable magnetic nanoparticles with a CO₂-adsorbing surface and to a plant for carrying out said process. The process and plant of the invention are particularly suitable to reduce CO₂ emissions of the steel industry.

## Description

### Field of the invention

The present invention is directed to an improved process for carbon capture that employs regenerable magnetic nanoparticles with a CO₂-adsorbing surface and to a plant for carrying out said process. The process and plant of the invention are particularly suitable to reduce CO₂ emissions of the steel industry.

### State of the Art

A rapid and deep reduction of emissions in the energy-intensive industries is needed to avoid the risk of dangerous climate change. Global industrial CO₂ emissions account for 31% of the total emissions, with steel and cement industries as the largest single contributors. The Paris Agreement implies that these sectors must reach zero emissions by 2060, while the European Union seeks to achieve 80% reduction of greenhouse gases by 2050 compared to 1990. For the steel industry, meeting these targets requires fundamental technology and process changes combined with a reduction of material demand and increased recycling.

Today's dominant blast furnace e basic oxygen furnace (BF/BOF) production route relies on the use of coking coal and its mechanical properties, which makes it difficult to switch to other reduction agents in the blast furnace. Global steel production is forecast to double between 2012 and 2050 with demand growth mainly in developing countries. Consequently, fundamental changes in steelmaking processes are required.

There are two main options for low emission steelmaking: (i) continued use of fossil fuels but with carbon capture and storage (CCS), and (ii) use of renewable electricity for producing hydrogen as reduction agent or directly in electrolytic processes.

Carbon Capture and Storage (CCS) consists of three major steps: CO₂ capture from the energy conversion process; CO₂ transport; and CO₂ storage. For each step there are currently several technology options, with different levels of performance and maturity, so numerous constellations for CCS can be envisaged although many technological hurdles remain to be overcome before commercialization is feasible.

Focusing on CO₂ capture, the main problems are: the low pressure and dilute concentration dictate a high actual volume of gas to be treated; trace impurities in the flue gas tend to reduce the effectiveness of the CO₂ adsorbing processes.

Furthermore, compressing captured CO₂ from atmospheric pressure to typical pressure (102 to 136 atm or 1,500 to 2,000 psi) of pipelines in which CO can be transported more economically and efficiently represents a large parasitic load.

There are three main methods of CO₂ capture with comparable costs and efficiency: post-combustion capture that separates CO₂ from flue gases produced by combustion of a primary fuel (coal, natural gas, oil or biomass) in air; pre-combustion capture that processes the primary fuel in reactor to produce separate streams of CO₂ for storage and H₂ which is used as a fuel; and oxyfuel combustion that uses oxygen instead of air for combustion, producing a flue gas that is mainly composed of H₂O and CO₂ and which is readily captured.

Separation of CO₂ in capture processes can be carried out by absorption, adsorption, membrane separation, and cryogenic processes. Absorption can be chemical absorption, wherein the solvent (usually alkanolamines) chemically reacts with CO₂ or physical absorption, wherein the solvent only interacts physically with CO₂ (such as glycol ethers in the Selexol Process as known in the art).

One of the methods proposed for CO₂ concentrating is by CO₂ absorption and stripping with aqueous amines, as disclosed in U.S. Pat. No. 1,783,901, dated 1930. Aqueous amine absorbent agents have been successfully used to clean carbon dioxide and hydrogen sulphide from natural gas and industrial waste streams: the absorbent agent absorbs CO₂ from flue gas and is regenerated by heating for several hours in recovery columns at 150°C. This technology can be applied to already existing plants. However, there are some major disadvantages: the equipment would be very large, comparable with the footprint size of a coal-fired power plant and this is a significant challenge when dealing with existing plants that have fixed layouts and limited open space. Furthermore, large volumes of solvent and water would be needed; also, heating to regenerate the solvent would reduce efficiency and can produce toxic byproducts; emissions of solvents from recovery columns have to be scrubbed and eliminated and the solvent that is degraded by flue-gas impurities needs to be disposed. Furthermore, the cost of amine scrubbing to capture carbon dioxide, then compressing it to pipeline pressure, is prohibitively expensive.

As mentioned above, another method proposed for CO₂ concentration is oxy-fuel combustion, in which the fuel is burned with a mixture of recirculated flue gas and oxygen instead of air. The absence of nitrogen (by excluding air) produces a flue gas stream with a high concentration of CO, and therefore facilitates capture. Oxy-fuel combustion is being developed for both turbine power cycles and for pulverized coal plants. Oxy-fuel combustion can be performed using conventional atmospheric oxy-fuel combustion power cycles or pressurized oxy-fuel combustion systems that have the potential for even better performance. However, the main problem with known oxy-fuel methods is the parasitic power demand for separating oxygen from the air, which is usually completed cryogenically. For a typical 500 MW coal-fired power station, supplying pure oxygen requires at least 15% of the electricity the plant generates.

Hydrogen direct reduction (H-DR) is a relatively unapplied for low emission steelmaking. The principle behind H-DR is to operate a natural gas-based direct reduction with hydrogen from electrolysis instead, a changeover which has not been demonstrated industrially up to now. EP3425070 discloses employment of H-DR in iron or steel making plants.

In this solution, specially developed iron ore pellets are reduced by hydrogen gas in a so-called direct reduction process. Reduction occurs in a solid state at a lower temperature than in the blast furnace process and produces an intermediate product, sponge iron or direct reduced iron (DRI), with water vapors emitted from the top of the furnace. Water vapors can be condensed and scrubbed before reuse in the plant. Hydrogen gas is produced by electrolyzing water using renewable electricity (e.g. from hydro or wind power plants), with oxygen gas as a by-product. Hydrogen storage of sufficient capacity is used to balance between the DRI process and the electricity grid allowing a significant amount of intermittent power generation by e.g. wind or solar power plants to be connected/to be connected to it. The sponge iron can be used as hot DRI and melted immediately in an electric arc furnace (EAF) together with recycled scrap. The DRI can also be processed into hot briquetted iron (HBI), which can be stored and shipped to another site. The crude steel from the EAF goes through a similar process as in the blast furnace-based route, i.e. alloying and refining before being cast into slabs, ready for rolling and further heat treatment before shipping to customers. However, this solution has significant disadvantages.

The system is however too dependent on the use and the price of the renewable electricity and for this reason it is subject to market fluctuations which could be economically disadvantageous and inefficient in achieving the CO₂ reduction target. Also, it is not possible to apply this solution to existing systems especially for the spaces needed for hydrogen storage, with the consequent increase in investment costs. Moreover, the fact of having a hydrogen stock near a blast furnace introduces safety problems for the risk of explosions and fire. Lastly, to date, there is still no certainty on the real quality of the final product obtained.

The present invention is aimed at overcoming the aforementioned limits of the prior art solutions for reducing carbon emissions, by means of a new sustainable and economically advantageous system that can increase the carbon capture capacity, achieving the legislations targets.

According to the invention, CO₂ is captured in liquid phase by special particles with high adsorption surface, which moreover are easily regenerable through an electrochemical process. A major advantage of the present invention is thus the use of completely reusable molecules. Moreover, it provides valuable secondary products. The process of the invention thus represents an economically advantageous process, which can be implemented to not depend on external sources of energy. Also, the system of the invention can be easily and efficiently integrated in existing steelmaking plants, constituting a closed loop cycle for the CO₂ capture with high efficiency and sustainability.

Therefore, the object of the present invention is a process for capturing carbon dioxide as claimed by claim 1. Moreover, the present invention is directed to a plant for carrying out said process and to the use of magnetic nanoparticles functionalized with amine groups in a carbon dioxide capture process.

### Brief description of the drawings

Figure 1: scheme of a plant for carrying out the process of the invention, according to a preferred embodiment
Figure 2: A) representation of a magnetic nanoparticle employed in the invention (1: nanoparticle core; 2: dodecanoic acid surface-modified nanoparticle; 3: amine-modified nanoparticle). B) representation of deposition of aminoacidic functional groups onto nanoparticles by co-precipitation; C) representation of deposition of amine functional groups onto nanoparticles by impregnation-sonication
Figure 3: representation of the CO₂ capture phase in a fluid system according to the invention

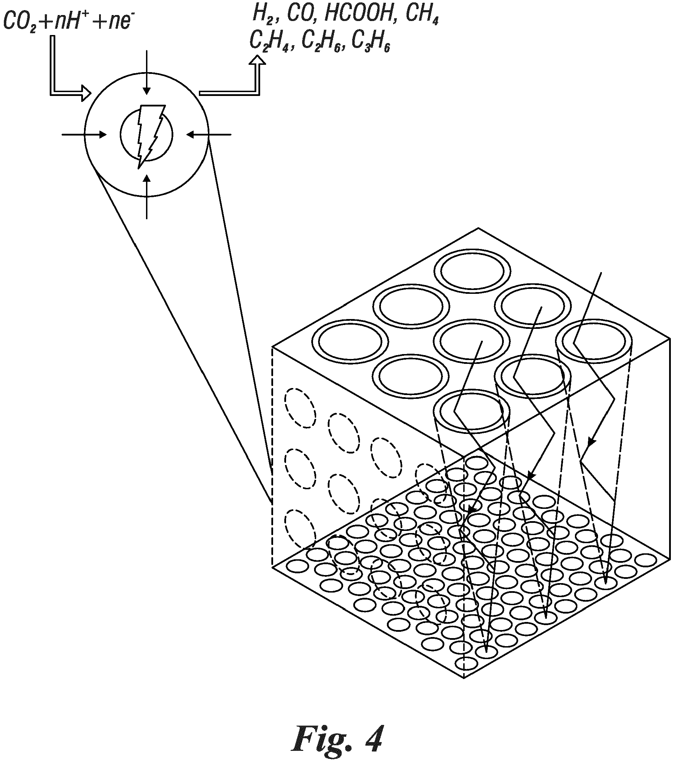

Figure 4: representation of the electrochemical reduction phase wherein magnetic nanoparticles are magnetically attracted to a catalytic metallic electrode, e.g. copper, connected to an external power source to apply a circulating current through a counterelectrode.
Figure 5: coating load (wt.%) of the magnetic nanoparticles (MNPs) coated with different functional groups: epsilon-amino acid (ε-), diethylenetriamine (DETA-), triethylenetetramine (TETA-), polyethyleneimine (PEI-)
Figure 6: CO₂ uptake by the magnetic nanoparticles (MNPs) of figure 5.
Figure 7: Adsorption-thermal desorption cycles of CO₂ on magnetic nanoparticles
Figure 8: voltammograms measured in electrochemical reduction reactor of example 1.

### Detailed description of the invention

The present invention is directed to a process for reducing emissions of carbon dioxide comprising a phase of carbon capture comprising:
i) providing a fluid that includes a magnetic nanoparticle material functionalized to capture carbon dioxide;
ii) introducing a stream including carbon dioxide into said fluid until said magnetic nanoparticle material is saturated with carbon dioxide.

According to the present invention, the term "nanoparticle" refers to a particle with particle size ranging between 1 nm and 200 nm.

The term "magnetic" means that the nanoparticle includes a material having the property of becoming magnetized under the action of an external magnetic field, and remaining long magnetized when the field is canceled. Examples of magnetic nanoparticles are disclosed by Biehl P et al. (Polymers 2018, 10, 91) and by Yamaura M. et al. (Journal of Magnetism and Magnetic Materials 279 (2004) 210-217), which however are functionalized to capture different compounds.

Magnetic nanoparticles suitable for being employed in the process of the invention will be described in more detail hereafter.

The process of the invention preferably further comprises a phase of regeneration of the magnetic particle material, wherein the fluid comprising the magnetic nanoparticle material loaded with carbon dioxide undergoes a step of electrochemical reduction, by which there are obtained methane and oxygen and a fluid comprising regenerated magnetic particle material.

In the "regenerated magnetic particle material" according to the present invention there is no carbon dioxide loaded on the magnetic nanoparticles and the magnetic nanoparticles are again capable of capturing carbon dioxide.

Preferably, the fluid that includes a magnetic nanoparticle material functionalized to capture carbon dioxide is an aqueous fluid, but non-aqueous fluids are also suitable.

Saturation of the magnetic nanoparticles with carbon dioxide can be assessed by measuring the free CO₂ in the fluid by gas-sensitive electrodes.

In preferred embodiments, the process further comprises a phase of high temperature electrolysis, wherein a stream of carbon dioxide, water vapor and heat produced by the combustion of hydrocarbons (such as combustion of coal by a blast furnace) is introduced into a high temperature electrolysis cell and converted into hydrogen and carbon monoxide, and oxygen; more preferably conversion occurs at a temperature comprised between 600°C and 800°C, applying a circulating current in the range 0.05 to 1 A cm⁻², more preferably in the range 0.2 to 0.6 A cm⁻²

The phase of high temperature electrolysis is then followed by a phase of power generation wherein, in a low temperature fuel cell, hydrogen, carbon monoxide and oxygen produced by the high temperature electrolysis are re-converted into carbon dioxide and water, with production of electric power; more preferably conversion in the low temperature fuel cell occurs at a temperature comprised between 400°C and 600°C.

Preferably, the stream including carbon dioxide introduced into the magnetic nanoparticles' fluid is the stream of carbon dioxide and water obtained in the power generation phase.

The invention is further directed to a plant for carrying out the process of the invention comprising: a fluid including a magnetic nanoparticle material functionalized to capture carbon dioxide; a carbon capture reactor containing said aqueous fluid; a source of carbon dioxide in fluid communication with the carbon capture reactor. Preferably the plant further comprises an electrochemical reactor in fluid communication with the carbon capture reactor and fed with a fluid including the magnetic nanoparticle material loaded with captured carbon dioxide; in some embodiments, the electrochemical reactor and the carbon capture reactor are the same reactor.

The source of carbon dioxide preferably includes collected flue gases produced by the combustion of hydrocarbons, more preferably produced by a steelmaking plant.

Preferably, the plant of the invention further includes a power source that is electric power produced by a low temperature fuel cell in fluid communication with the carbon capture reactor. Preferably, said low temperature fuel cell is in fluid communication also with the electrochemical reactor, so that the low temperature fuel cell can be powered by methane and oxygen produced by electrochemical reduction of captured carbon dioxide in the electrochemical reactor.

Preferably, the plant further comprises a high temperature electrolysis cell in fluid communication with the low temperature fuel cell and fed with the source of carbon dioxide. More preferably the high temperature electrolysis cell is powered by electric power produced by the low temperature fuel cell.

Preferably the carbon capture reactor is a fluidic reactor.

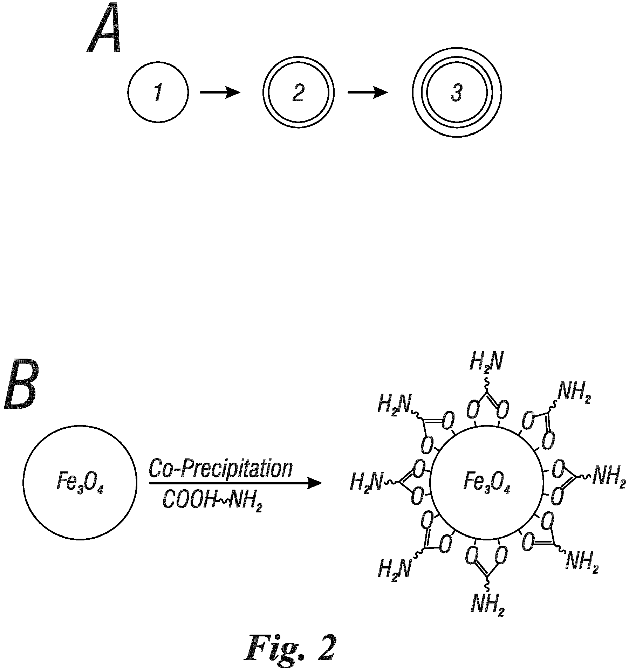

Preferably, the magnetic nanoparticle material functionalized to capture carbon dioxide consists of magnetic nanoparticles coated with amino functional groups. More preferably, the magnetic nanoparticles in the magnetic nanoparticle material are coated with different amino functional groups. For instance, the magnetic nanoparticle materials can include nanoparticles coated with amino acids together with nanoparticles coated with amines. Preferably, the magnetic nanoparticles have a core of ferromagnetic material, whose surface is functionalized with amino functional groups (see fig. 2A). More preferably, the magnetic nanoparticles are functionalized with amino functional groups selected from the group consisting of an amino acid, diethylenetriamine, triethylenetetramine, polyethyleneimine, and combinations thereof.

The core of the magnetic nanoparticles of the present invention can be as in the nanoparticles described in EP3146537. The ferromagnetic material can be for instance selected from magnetite, maghemite, barium ferrite, cobalt ferrite, nickel ferrite, manganese ferrite, strontium ferrite, or zinc ferrite.

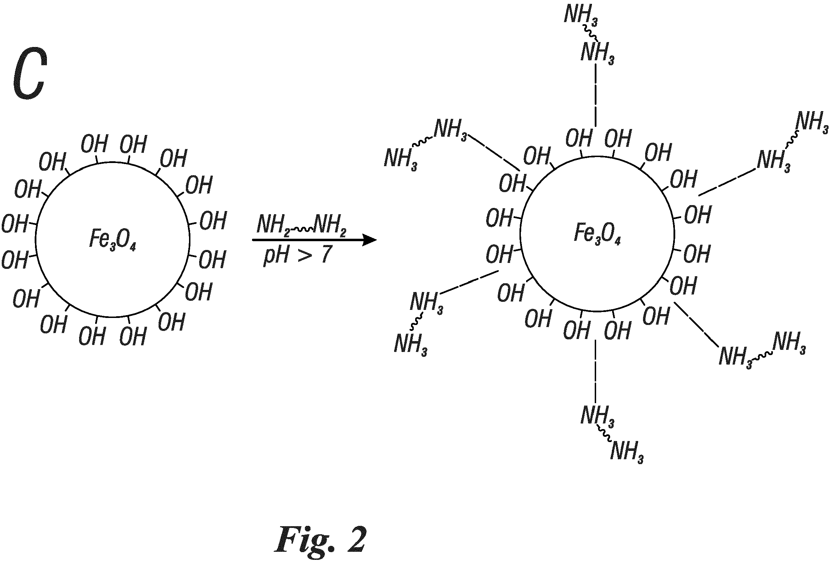

Magnetic nanoparticles can be prepared by contacting a solution containing a defined amount of base (30%wt. NaOH) and functional group with a known quantity of Fe²⁺ and Fe³⁺ salts (with molar ratio Fe³⁺/Fe²⁺ equal to 2.1) at room temperature though a two-way dosing and mixing system. The magnetic nanoparticles can be functionalized to capture carbon dioxide by modifying their surface with amine groups. Deposition of amines onto the particles can occur through two different pathways, namely co-precipitation and impregnation-sonication. Amino acids are generally grafted onto the particles surface via the formation of a strong polar covalent bond (see fig. 2B); amines are expected to be impregnated onto the support by means of physical adsorption (Fig. 2C).

Magnetic nanoparticles can be produced with a coating of carboxylic acid and amines molecules can be linked to the functional groups of the carboxylic acid.

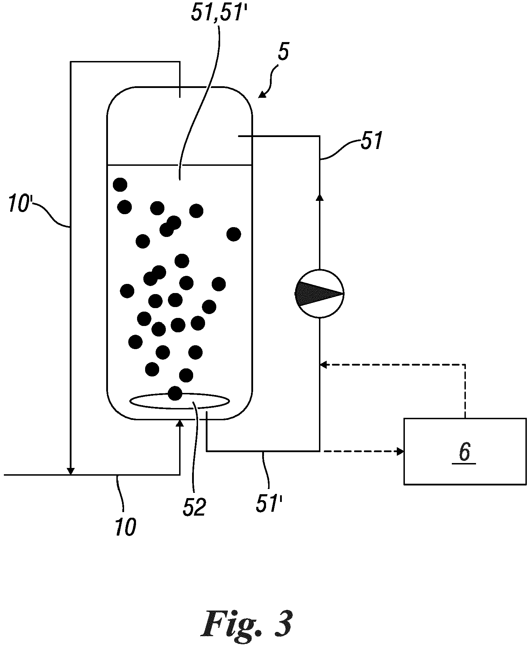

In a process according to a preferred embodiment of the invention, as represented in Fig. 3, a stream including carbon dioxide (10) is introduced, preferably through a gas diffuser, into a fluid containing magnetic nanoparticle material (51) functionalized to capture carbon dioxide in a carbon capture reactor (5). The magnetic nanoparticle material loaded with carbon dioxide (51') are then regenerated by electrochemical reduction (6) and a stream of regenerated nanoparticles (51) is recycled to the capture reactor. Optionally a portion of carbon dioxide that is not adsorbed on the nanoparticles is recycled inside the carbon capture reactor (5) in a wet gas stream (10') .

Advantageously, the magnetic nanoparticles loaded with carbon dioxide (51') can be magnetically attracted to a catalytic metallic electrode in the electrochemical reduction reactor (6).

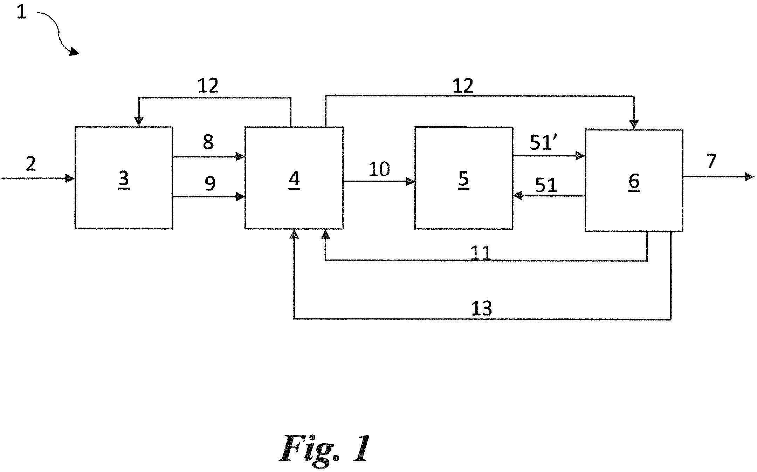

A scheme of a plant and closed cycle process according to a particularly preferred embodiment of the invention is represented in Figure 1 and described hereafter.

A concentrated first stream (2) comprising CO₂, H₂O as vapor and heat, produced by the combustion of a hydrocarbon, such as coal, by a standard blast furnace, is converted into hydrogen and CO (8) and into oxygen (9) by a high temperature electrolysis reaction in an electrolysis cell (3). The electric power (12) required for this reaction is provided by a low temperature fuel cell (4) that is in fluid communication with the electrolysis cell; the low temperature fuel cell (4) is powered by the same hydrogen and CO (8) and oxygen (9) obtained by the high temperature electrolysis reaction. The low temperature fuel cell (4) produces a second stream (10) comprising CO₂ and H₂O, exactly comparable to the first stream produced by the combustion of a hydrocarbon, but at a considerably lower temperature and therefore directly exploitable for the capture reaction in the carbon capture phase, occurring in a carbon capture reactor (5) in fluid communication with the low temperature fuel cell (4). In the capture reactor (5) it is present an aqueous fluid including a magnetic nanoparticle material (51) with high adsorbent surface functionalized to capture CO₂. The fluid including the magnetic nanoparticles loaded with the captured CO₂ (51') feeds the electrochemical reduction process in an electrochemical reduction reactor (6) in which, by electric power (12) generated by the low temperature fuel cell (4), CO₂ is stripped from the nanoparticles, so that nanoparticles are regenerated, being again capable of capturing CO₂. The fluid including the regenerated nanoparticles (51) is returned to the capture reactor (5) for the carbon capture phase. The CO₂ stripped from the nanoparticles is reduced with production of high value CH₄ (13) and formic acid at the cathode, and oxygen (11) at the anode, that can be used to power the low temperature fuel cell (4).

H₂O (7) is the final product of the cycle (1).

More in detail, in each phase the following reactions occur:
- High temperature electrolysis:
   **Cathode:**

      CO₂ (g) + 2e⁻ → CO(g) + O²⁻

      H₂O(g) + 2e⁻ → H₂(g) + O²⁻
   **Anode:**

      2O²⁻ → O₂(g) + 4e⁻
- Low temperature Fuel Cell conversion:

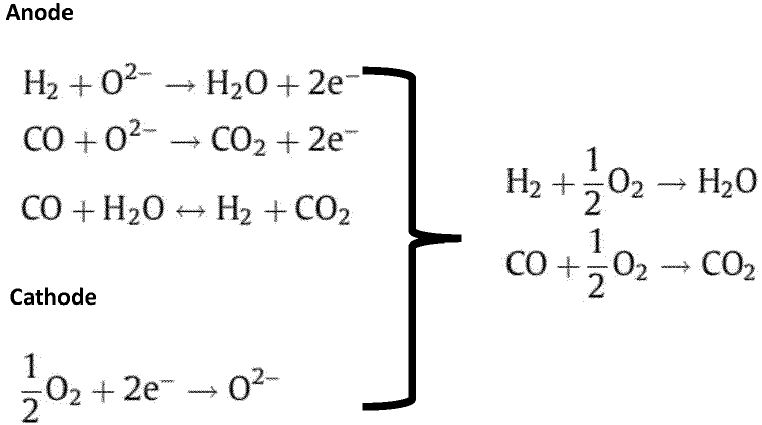

With contribution of methane to favor the overall reaction:

CH₄ + H₂O→3 H₂ + CO

• Electrochemical Reduction:

| Reduction potentials of CO₂ | *E*° [V] vs SHE at pH 7 |
|---|---|
| CO₂ + e⁻ → CO₂⁻ | -1.9 |
| CO₂ + 2H⁺ + 2e⁻ → HCOOH | -0.61 |
| CO₂ + 2H⁺ + 2e- → CO + H₂O | -0.52 |
| 2CO₂ + 12H⁺ + 12e⁻ → C₂H₄ + 4H₂O | -0.34 |
| CO₂ + 4H⁺ + 4e⁻ → HCHO + H₂O | -0.51 |
| CO₂ + 6H⁺ + 6e⁻ → CH₃OH + H₂O | -038 |
| CO₂ + 8H⁺ + 8e⁻ → CH₄ + 2H₂O | -0.24 |
| 2H⁺ + 2e⁻ → H₂ | -0.42 |

The electrochemical reduction phase is preferably performed by one of the following methods:
direct electrochemical reduction of CO₂ supported on the magnetic nanoparticles in a concentrated electrode cell configuration;
electrochemical release of CO₂ adsorbed on the magnetic nanoparticles and its electrochemical reduction at a nanostructured cathode in a two compartments electrochemical cell with a CO₂ permeable membrane;
direct electrochemical reduction of CO₂ adsorbed on the magnetic nanoparticles in a concentrated electrode cell configuration under pulse current setup

### EXAMPLES

### Example 1

Four functional groups were selected for co-deposition onto magnetic nanoparticles substrate with a 40 wt.% nominal load, with respect to the total weight of the coated nanoparticle. The co-deposition was performed as follows: a solution containing Fe2+ and Fe3+ (molar ratio 1:2) was mixed with a base (30 %wt. NaOH) at room temperature though a pump-siring system. The resulting dispersion was stirred continuously for 30 min. Functionalized nanoparticles were prepared through co-precipitation of the functional groups together with the sodium hydroxide solution (40wt. % of the nominal load).

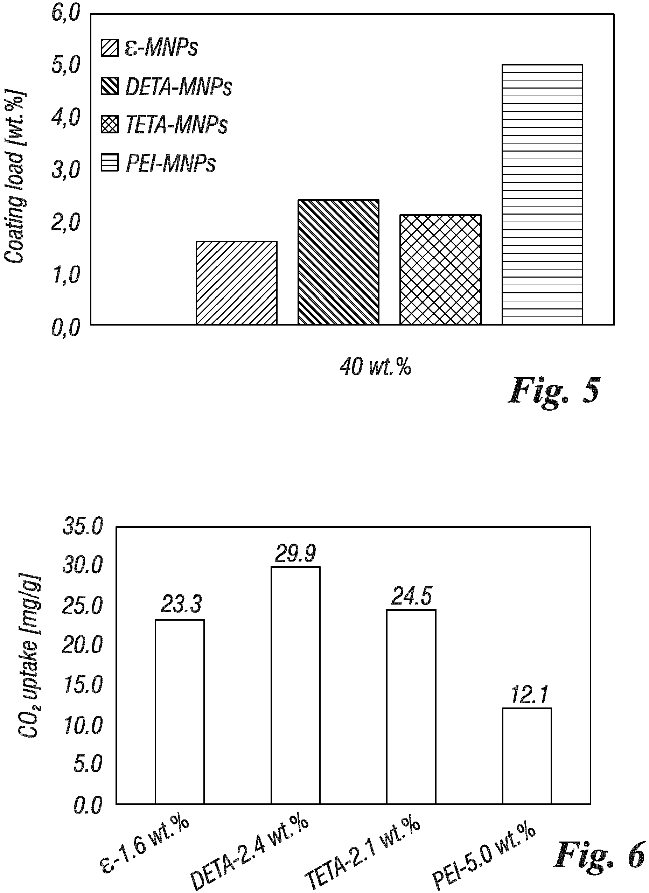

The actual amount of each functional group was assessed by means of standard elemental analysis CHNS protocol for carbon and nitrogen measurements (see Fig. 5)

CO₂ sorption capacities at a first cycle for all samples are displayed in figure 5.

From the thermogravimetric analysis between 35 °C and 100 °C, all samples showed sorption capacity between 10 and 30 mg g⁻¹, confirming their ability to effectively capture CO₂ (see Fig. 6)

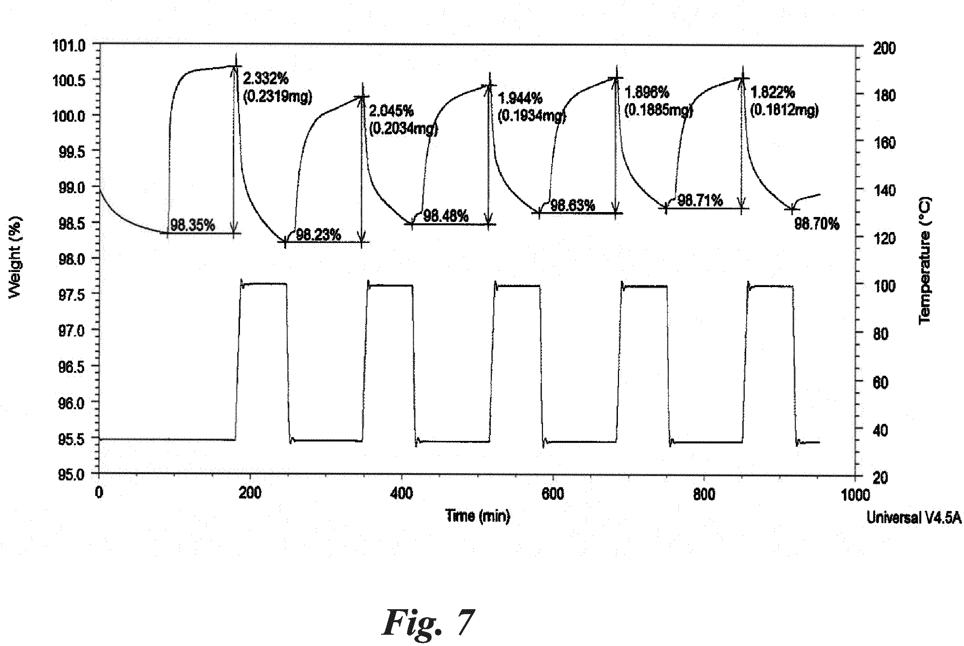

The nanoparticles generally evidenced a sound stability and regenerability, with sorption capacities up to 30 mg per gram of MNPs. Fig. 7 shows the thermogravimetric analysis of several adsorption/thermal desorption cycles of CO2, proving the stability in adsorption capacity of recycled nanoparticles.

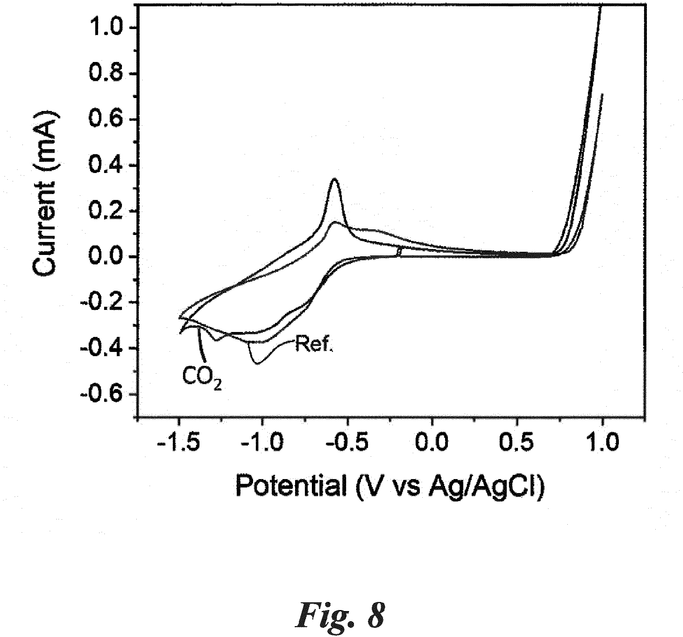

Magnetic nanoparticles with adsorbed CO2 can be introduced into a solution of NaOH (pH = 12.7) and stirred between an anode of platinum and a FTO (fluorinated tin oxide) cathode at room temperature. Under a sweeping potential of the FTO electrode with respect of a standard reference electrode, the voltammograms can be measured (as shown in figure 8). It can be observed the appearance of cathodic peaks when CO₂ is adsorbed on the particles, proving the electrochemical reduction of CO₂ on the particles when in contact with the electrode.

## Claims

1. Process for reducing emissions of carbon dioxide comprising a phase of carbon capture comprising:
i) providing a fluid that includes a magnetic nanoparticle material (51) functionalized to capture carbon dioxide;
ii) introducing a stream including carbon dioxide (2,10) into said fluid until said magnetic nanoparticle material (51) is saturated with carbon dioxide.

2. Process according to claim 1 further comprising a phase of regeneration of the magnetic particle material comprising:
iii) carrying out electrochemical reduction of the carbon dioxide captured on the magnetic nanoparticle material in an electrochemical cell (6) until obtaining methane (13) and a fluid comprising regenerated magnetic particle material (51).

3. Process according to claim 1 or 2 further comprising a phase of high temperature electrolysis, wherein a first stream (2) comprising carbon dioxide, water vapor and heat is introduced into a high temperature electrolysis cell (3) and converted into hydrogen and carbon monoxide (8), and oxygen (9), preferably at a temperature comprised between 600°C and 800°C.

4. Process according to claim 3 wherein said first stream (2) of carbon dioxide has been produced by the combustion of hydrocarbons.

5. Process according to claims 3 or 4, further comprising a phase of power generation wherein, in a low temperature fuel cell (4), hydrogen and carbon monoxide (8), and oxygen (9), produced by the high temperature electrolysis are converted into a second stream (10) of carbon dioxide and water, with production of electric power (12), preferably at a temperature comprised between 400°C and 600°C.

6. Process according to claim 5 wherein the stream including carbon dioxide introduced into the fluid in the phase of carbon capture is the second stream (10) of carbon dioxide and water.

7. Plant for carrying out the process of claims 1 to 6, comprising:
a fluid including a magnetic nanoparticle material functionalized to capture carbon dioxide (51); a carbon capture reactor (5) containing said aqueous fluid; and a source of carbon dioxide in fluid communication with the carbon capture reactor (5).

8. Plant according to claim 7 further comprising: an electrochemical reactor (6) in fluid communication with the carbon capture reactor (5) and fed with a fluid including the magnetic nanoparticle material that is loaded with captured carbon dioxide, preferably wherein the electrochemical reactor (6) and the carbon capture reactor (5) are the same reactor.

9. Plant according to claims 7 or 8, wherein the source of carbon dioxide is flue gas produced by the combustion of hydrocarbons, preferably produced by a steelmaking plant.

10. Plant according to claims 7 to 9, further comprising a low temperature fuel cell (4).

11. Plant according to claim 10, wherein the low temperature fuel cell (4) is in fluid communication with the carbon capture reactor (5).

12. Plant according to claims 10 or 11, when referred to claim 8, wherein the low temperature fuel cell (4) is in fluid communication with the electrochemical reactor (6).

13. Plant according to claims 7 to 12 further comprising a high temperature electrolysis cell (3) in fluid communication with the source of carbon dioxide.

14. Plant according to claims 10 to 12 further comprising a high temperature electrolysis cell (3) in fluid communication with the source of carbon dioxide and in fluid communication with the low temperature fuel cell (4).

15. Process according to claims 1 to 6 or plant according to claims 7 to 14 wherein the magnetic nanoparticle material functionalized to capture carbon dioxide (51) consists of magnetic nanoparticles coated with amino functional groups, preferably selected from the group consisting of: an amino acid, diethylenetriamine, triethylenetetramine, polyethyleneimine, and combinations thereof.
